# EUROPEAN PATENT APPLICATION

(11) **EP 1 414 187 A1**
(43) Date of publication of application: **28.04.2004**
(21) Application number: 02360290.7
(22) Date of filing: 22.10.2002
(51) Int. Cl.: H04L 12/26

(54) **Method for evaluating the quality of service of a telecommunication link via a network**

(71) Applicant: ALCATEL, 75008 Paris (FR)
(72) Inventor: Gass, Raymond, 67150 Bolsenheim (FR)
(74) Representative: Rausch, Gabriele, Dr.

(57) **Abstract**

The present invention concerns a method for evaluating and/or controlling the quality of service of a telecommunication link via a network.

Method characterised in that it consists in performing the following operations:
- determination of the edge equipment,
- determination of the impairments introduced by the various pieces of equipment or hardware involved in the concerned telecommunication link,
- real time measurement of delay and packet loss in relation with said telecommunication link,
- real time measurement of noise in relation with said telecommunication link,
and then computing the values of the foregoing determined or measured parameters and factors to provide an indicator, preferably a numerical indicator, representative of the quality of service perceived by the user(s) of said telecommunication link.

## Description

The present invention is related to the field of telecommunications over networks, more particularly to the evaluation of the quality of such communications, and concerns a method for evaluating and/or controlling the quality of service of such a telecommunication link.

In particular in the field of Voice over Internet Protocol (VoIP) networks, the quality of service (QoS) is an important issue for both customers and providers.

It is, for example, necessary to monitor the quality of service offered to the customers by VoIP networks in order to:
- detect degradation due to network loading conditions or to failures;
- assess on line quality against negotiated QoS (at service creation or on a call by call basis);
- support QoS based billing.

Proposals have been made in order to provide an indication of the QoS, which are based on certain metrics provided by the LAN (Local Area Network) infrastructure (such as delay and packet loss).

But, if metrics provided by the LAN infrastructure are useful to qualify the LAN itself, they are not representative of the QoS perceived by the users for VoIP services.

This situation can be illustrated by comparing the two following examples.

On the one hand, a 3% packet loss on a LAN is a very bad condition, and simple measurement of LAN metrics would conclude that QoS is unacceptable. In fact, if this condition occurs with G.711 PLC (Packet Loss Concealment) based IP phones, the perceived MOS is 4.1, which is quite good.

On the other hand, a 1% random packet loss with G.723.1 and VAD (Voice Active Detection) leads to a MOS value of 2.9, which is unacceptable.

It has also been proposed to make us of the previous metrics to compute an estimate of a quality indication such as the ones known as MOS (Mean Opinion Score) and R factor (see for example WO 01/080492).

Nevertheless, even in this latter proposal some key components and factors are still not taken into account or at least not considered adequately, when performing said quality indication computation.

It is an aim of the present invention to overcome these limitations.

Therefore, the present invention concerns a method for evaluating and/or controlling the quality of service of a telecommunication link via a network, in particular a VoIP link between two terminals, characterised in that it consists in performing the following operations:
- determination of the edge equipment,
- determination of the impairments introduced by the various pieces of equipment or hardware involved in the concerned telecommunication link,
- real time measurement of delay and packet loss in relation with said telecommunication link,
- real time measurement of noise in relation with said telecommunication link,
and then computing the values of the foregoing determined or measured parameters and factors to provide an indicator, preferably a numerical indicator, representative of the quality of service perceived by the user(s) of said telecommunication link.

The invention will be better understood thanks to the following description explaining a preferred embodiment of the invention as a non limitative example, in connection with the enclosed schematical drawings.

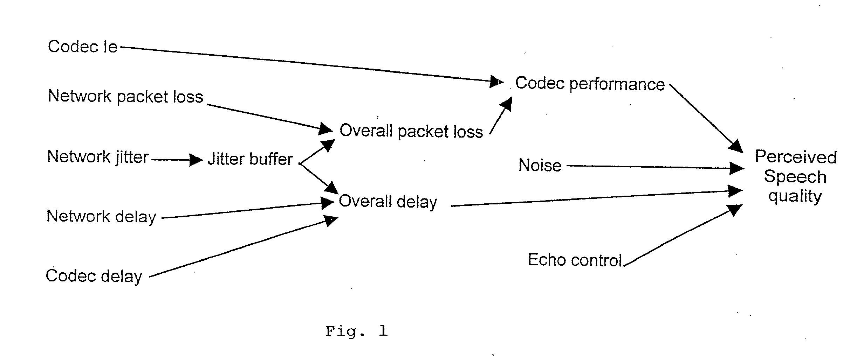

Figure 1 is a schematic diagram summarizing the impairments induced by the network and the terminals and affecting quality of service, in case of VoIP communication links.

Figure 2 is a symbolic drawing illustrating a typical VoIP telecommunication link and a tool for performing the method according to the invention.

According to the invention, and as exposed before and showed in the enclosed drawings, the inventive method performs an exhaustive calculation of an indicator representative of the quality of service, based on a so-called Emodel and constructed with the indicated relevant parameters.

Said calculated indicator can, for example, consist of the MOS, the calculation method of which is known from the prior art.

The measurements of delay and packet loss is provided by edge equipment and the impairments induced by the involved pieces of equipment or hardware is retrieved from a library or a similar storage means containing information about the possibly involved pieces of equipment (such as: type of Codec, echo control, noise or similar).

Advantageously, the noise measurement is performed by means of a probe, preferably near one of the ends of the concerned telecommunication link. Thus, the noise measurement itself is based on centralised calculation using parameters computation such as described in VAD algorithms.

The inventive method can provide that, when the quality of service indicator falls below or reaches a present acceptable minimum value, an event is automatically generated, such as an alarm or an action on the traffic load of the network or at least of a part of said network.

If real time analysis is not possible or desired, it can be planned that one or several computed quality of service indicator value(s) is (are) recorded in connection with the considered telecommunication link, and analysed after said link has vanished, in the course of an a-posteriori QoS analysis.

According to a first embodiment of the invention, the method for QoS evaluation and/or control can be performed automatically for each call, i.e. call by call.

According to a second embodiment, the inventive method is performed for a specific communication route, automatically or on demand, once, several times or in a repetitive manner.

According to a third embodiment, the inventive method is performed on-demand to realise a diagnostic of part of the network, such as for example a port or a node.

The method according to the present invention allows to take fully into consideration all the relevant parameters and factors affecting QoS, and in particular jitter and delay/packet loss, background noise and end-to-end delay.

As queuing in LAN components will affect transit time of packets, VoIP pieces of equipment (IP phone, gateway) incorporate a jitter buffer. The jitter buffer will add some delay, but since delay introduces degradation to voice signal quality, it is usually limited, which means possible packet loss due to excessive jitter. This contribution to the overall packet loss is not available when taking metrics out of the LAN only, but are addressed with the present invention.

Background noise is a key element of the perceived MOS and therefore it needs to be considered (and measured) for the calculation.

Finally, end-to-end delay is the only relevant factor for the calculation of the MOS or R factors, and delays measured inside the LAN are too restrictive. The measurement of the real delay which is performed by the invention, is based on an inband mechanism to provide significant enhancement.

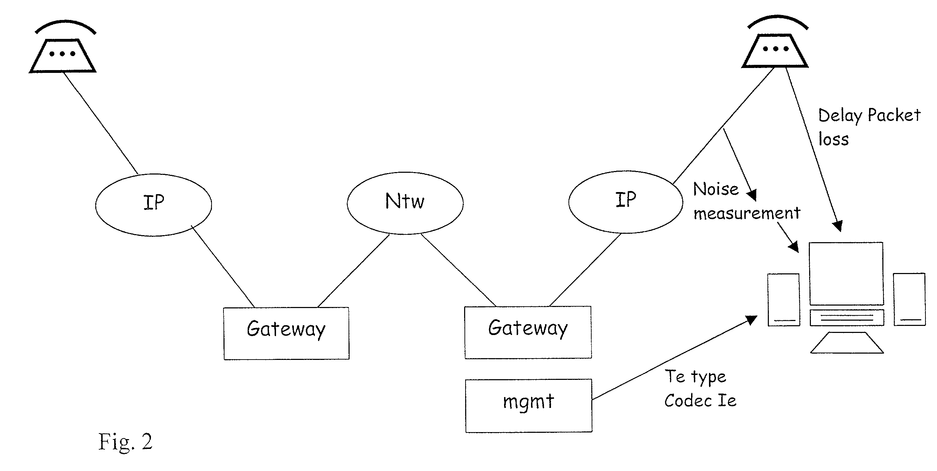

The present invention also concerns, as partly represented on figure 2, a measurement and evaluation tool for evaluating and/or controlling the quality of service of a communication link via network, an particular a VoIP between two terminals, characterised in that it comprises means able to perform the following operations:
- determination of the edge equipment,
- determination of the impairment introduced by the various pieces of equipment or hardware involved in the concerned telecommunication link,
- real time measurement of delay and packet loss in relation with said telecommunication link,
and also computing means which are able to provide a numerical indicator based on the foregoing determined or measured parameters and factors and representative of the quality of service in relation with said telecommunication link.

According to a feature of the invention, said tool comprises a noise measurement probe and also means to establish a communication with a library or a similar storage means containing information about the pieces of equipment or hardware possibly involved in the construction of the telecommunication link and also means able to establish a communication with at least one of the two terminals of said telecommunication link.

The present invention is, of course, not limited to the preferred embodiments described herein and showed on the attached drawings, changes can be made or equivalents used without departing from the scope of the invention.

## Claims

1. Method for evaluating and/or controlling the quality of service of a telecommunication link via a network, in particular a VoIP link between two terminals, **characterised in that** it consists in performing the following operations:
- determination of the edge equipment,
- determination of the impairments introduced by the various pieces of equipment or hardware involved in the concerned telecommunication link,
- real time measurement of delay and packet loss in relation with said telecommunication link,
- real time measurement of noise in relation with said telecommunication link,
and then computing the values of the foregoing determined or measured parameters and factors to provide an indicator, preferably a numerical indicator, representative of the quality of service perceived by the user(s) of said telecommunication link.

2. Method according to claim 1, **characterised in that** the measurement of delay and packet loss is provided by edge equipment and **in that** the impairments induced by the involved pieces of equipment or hardware is retrieved from a library or a similar storage means containing information about the possibly involved pieces of equipment.

3. Method according to anyone of claims 1 and 2, **characterised in that** the noise measurement is performed by means of a probe, preferably near one of the ends of the concerned telecommunication link.

4. Method according to anyone of claims 1 to 3, **characterised in that**, when the quality of service indicator falls below or reaches a preset acceptable minimum value, an event is automatically generated, such as an alarm or an action on the traffic load of the network or at least of a part of said network.

5. Method according to anyone of claim 1 to 4, **characterised in that** one or several computed quality of service indicator value(s) is (are) recorded in connection with the considered telecommunication link, and analysed after said link has vanished.

6. Method according to anyone of claims 1 to 5, **characterised in that** it is performed automatically for each call.

7. Method according to anyone of claims 1 to 5, **characterised in that** it is performed for a specific communication route, automatically or on demand, once, several times or in a repetitive manner.

8. Method according to anyone of claims 1 to 5, **characterised in that** it is performed on-demand to realise a diagnostic of part of the network, such as for example a port or a mode.

9. Measurement and evaluation tool for evaluating and/or controlling the quality of service of a communication link via network, an particular a VoIP between two terminals, **characterised in that** it comprises means able to perform the following operations:
- determination of the edge equipment,
- determination of the impairment introduced by the various pieces of equipment or hardware involved in the concerned telecommunication link,
- real time measurement of delay and packet loss in relation with said telecommunication link,
and also computing means which are able to provide a numerical indicator based on the foregoing determined or measured parameters and factors and representative of the quality of service in relation with said telecommunication link.

10. Measurement and evaluation tool according to claim 9, **characterised in that** it comprises a noise measurement probe and also means to establish a communication with a library or a similar storage means containing information about the pieces of equipment or hardware possibly involved in the construction of the telecommunication link and also means able to establish a communication with at least one of the two terminals of said telecommunication link.
